# NEUE EUROPÄISCHE PATENTSCHRIFT

(11) **EP 4 067 548 B2**
(45) Veröffentlichungstag und Bekanntmachung des Hinweises auf die Entscheidung über den Einspruch: **18.02.2026**
(45) Hinweis auf die Patenterteilung: 22.03.2023
(21) Anmeldenummer: 22163578.2
(22) Anmeldetag: 22.03.2022
(51) Int. Cl.: D04H 1/49, D04H 1/498, D04H 1/732, D04H 1/74

(54) **ANLAGE ZUM VERFESTIGEN VON FASERN UMFASSENDEN LAGEN ZU EINER VLIESBAHN**
SYSTEM FOR CONSOLIDATING LAYERS COMPRISING FIBRES TO A NONWOVEN WEB
INSTALLATION DE CONSOLIDATION DES COUCHES COMPRENANT DES FIBRES EN UNE BANDE DE NON-TISSÉE

(30) Priorität: 29.03.2021 DE 102021107900
(43) Veröffentlichungstag der Anmeldung: 05.10.2022
(73) Patentinhaber: Andritz Küsters GmbH, 47805 Krefeld (DE)
(72) Erfinder: UGNON-COUSSIOZ, Jean-Michel, 38530 Barraux (FR); LATENDORF, Dennis, 47798 Krefeld (DE)
(74) Vertreter: Kluin Patent

(56) Entgegenhaltungen:
- EP-A1- 2 096 207
- EP-A1- 3 118 361
- EP-B1- 1 126 064
- EP-B1- 1 929 080
- EP-B1- 3 283 679
- WO-A1-01/63032
- WO-A1-02/077348
- WO-A1-2004/063451
- WO-A1-2004/097097
- WO-A1-2005/118934
- WO-A1-2008/074665
- WO-A1-2008/110134
- WO-A1-2015/000685
- WO-A1-2015/049018
- WO-A1-2016/165798
- DE-A1- 102008 008 549
- DE-A1- 102009 017 729
- DE-A1- 102013 107 237
- US-A1- 2002 157 766
- S.J. RUSSELL: "Handbook of Nonwoven", 22 December 2006, CRS PRESS, Cambridge, England, ISBN: 978-0-8493-2596-0, article A.G. BRYDON AND A. POURMOHAMMADI: "2 - Dry-laid web formation", pages: 16 - 111, XP009555995, DOI: 10.1533/9781845691998.16

## Beschreibung

Die Erfindung betrifft Anlage zum Verfestigen einer Kurzfasern umfassenden Lage mit einer Langfasern umfassenden Lage zu einer Vliesbahn, mit einem ersten umlaufenden Band, auf welchem die Langfasern umfassende Lage ablegbar und in einer Produktionsrichtung verlagerbar ist, mit einem umlaufenden Ablageband, auf das die Kurzfasern mit einem Stoffauflauf zur Bildung der Lage ablegbar sind und welches ein Abgabetrum aufweist, mit einem umlaufenden Übernahmeband mit einem Aufnahmetrum, mittels welchem die Kurzfasern umfassende Lage an einer Übergangsstelle an die Langfasern umfassende Lage übergebbar ist, und mit einer mit dem Abgabetrum oder vorzugsweise mit dem Aufnahmetrum in Wirkverbindung stehenden Einrichtung, mit welcher Abgabetrum und Aufnahmetrum zwischen einer Übernahmeposition, in welcher zumindest ein wesentlicher Anteil der Fasern von dem Abgabetrum dem Aufnahmetrum übergeben und vom Übernahmeband weitergeführt werden, und einer Ruheposition, in welcher Abgabetrum und Aufnahmetrum voneinander beabstandet sind und zumindest ein wesentlicher Anteil der Fasern nicht dem Aufnahmetrum übergeben und vom Ablageband weitergeführt wird, verlagerbar ist.

Eine Anlage zur Herstellung einer Vliesbahn mit einer Vorrichtung mit einem kontinuierlich umlaufenden Ablageband ist aus der EP 3 283 679 B1 bekannt. Die Fasern werden hierbei beispielsweise in Form einer wässrigen Emulsion kontinuierlich auf dem Ablageband abgelegt. Die Vorrichtung ist derart angeordnet, dass die Lage von Fasern vom Ablageband an einer Übergabestelle auf der Oberseite einer zweiten, in Produktionsrichtung vorlaufenden Faserlage abgelegt und Produktionsschritten zur Bildung einer Vliesbahn, wie Kompaktierung und Verfestigung, zugeführt wird.

Problematisch kann die Bereitstellung der Lage von Fasern mit einer derartigen Vorrichtung sein, wenn sie unterbrochen werden muss, beispielweise, weil auf eine andere Lage gewechselt werden soll, auf die die Lage von Fasern von der Übergabestelle abgegeben werden soll. Denn mit den regelmäßig verwendeten, zum Stand der Technik gehörenden Stoffaufläufen ist kontruktionsbedingt eine kurzfristige Unterbrechung des Ablegevorgangs nicht möglich. Würde zur Unterbrechung der Abgabe der Faserlage an der Übergangsstelle der Umlauf des Ablagebandes gestoppt, so hätte dies zur Folge, dass eine unerwünscht große Menge an Fasern im Bereich des Stoffauflaufs auf dem Ablageband abgelegt würde, was zu Problemen beim Wiederanfahren der Anlage und zumindest zur Bildung von fehlerhaften Bereichen der zu produzierenden Vliesbahn führen würde.

Einen weiteren Nachteil können derartige Anlagen beim Hochfahren derselben aufweisen. Denn soll der Ablegevorgang auf eine Langfasern umfassende, auf einem Förderer zugeführte Lage erfolgen, so werden die Fasern regelmäßig entweder zunächst auf dem Förderer abgelegt, da die Lage noch nicht zur Übergabestelle gefördert worden ist. Oder die Förderung der Lage ist beim Beginn der Ablage bereits fortgeschritten, so dass ein Längenabschnitt ohne die abgelegten fasern existiert. In beiden Fällen entsteht unerwünschter Ausschuss.

Es ist bekannt, zusätzlich zum Ablageband ein umlaufendes Übernahmeband mit einem Aufnahmetrum, mittels welchem die Kurzfasern umfassende Lage an einer Übergangsstelle an die Langfasern umfassende Lage übergebbar ist, und mit einer mit dem Abgabetrum oder vorzugsweise mit dem Aufnahmetrum in Wirkverbindung stehenden Einrichtung, mit welcher Abgabetrum und Aufnahmetrum zwischen einer Übernahmeposition, in welcher zumindest ein wesentlicher Anteil der Fasern von dem Abgabetrum dem Aufnahmetrum übergeben und vom Übernahmeband weitergeführt werden, und einer Ruheposition, in welcher Abgabetrum und Aufnahmetrum voneinander beabstandet sind und zumindest ein wesentlicher Anteil der Fasern nicht dem Aufnahmetrum übergeben und vom Ablageband weitergeführt wird, verlagerbar ist, vorzusehen, um die Übergabe der Kurzfasern umfassenden Lage an die Langfasern umfassenden Lage bewirken oder unterbrechen zu können, ohne dass hierzu der Stoffauflauf unterbrochen werden muss.

Anlagen aufweisend eine Vorverfestigungseinheit zum Verfestigen einer Kurzfasern umfassenden Lage mit einer Langfasern umfassenden Lage zu einer Vliesbahn sind aus der US 2002/157766 A1 und WO 2004/063451 A1 bekannt.

Der Erfindung liegt die Aufgabe zugrunde, eine Anlage mit den eingangs genannten Merkmalen derart weiterzuentwickeln, dass sie zur Herstellung einer Vliesbahn besonders gut geeignet ist, bei welcher eine leichte Kurzfasern umfassende Lage bspw. mit einem Flächengeweicht zwischen 5 und 50 Gramm pro Quadratmeter, bspw. eine leichte und nasse Holzfaserlage, auf eine Langfasern umfassende Lage, die bspw. ein Flächengewicht von zwischen 15 und 50 Gramm pro Quadratmeter aufweisen kann, aufgebracht und mit dieser verfestigt wird. Diese Herstellung bereitet regelmäßig Schwierigkeiten, da kardierte, Langfasern umfassende Lagen oft elastische Eigenschaften aufweisen und nach einer Kompaktierung Erholungseffekte zeigen, wodurch Deformierungen, Fehler und sogar Risse in der Holzfaserlage entstehen können. Die hergestellte Vließbahn kann bspw. ein Flächengewicht zwischen 20 und 150, vorzugsweise zwischen 40 und 70 Gramm pro Quadratmeter aufweisen.

Diese Aufgabe wird durch die in Anspruch 1 wiedergegebene Anlage gelöst. Vorteilhafte Weiterbildungen sind Gegenstand der Unteransprüche.

Die erfindungsgemäße Anlage umfasst eine Vorverfestigungseinheit, die zwei in Produktionsrichtung voneinander beabstandete Kompaktierungseinrichtungen aufweist, die in einem Bereich auf das Übernahmeband wirken und zwischen sich ein unteres Trum des Übernahmebandes bilden.

Die Vorverfestigungseinheit weist zwei in Produktionsrichtung voneinander beabstandete Kompaktierungseinrichtungen auf. Mit diesen ist in einem Bereich ein Abstand zwischen dem Übernahmeband und dem vorzugsweise parallel hierzu verlaufenden ersten Band auf einen Wert reduzierbar, der kleiner als die Summe der Dicken der beiden Lagen ist, wodurch die beiden Lagen aufgrund einer in dem Bereich auf sie flächig wirkenden Druckkraft kompaktierbar sind. Die beiden Bänder können sich in diesem Bereich auch kontaktieren, mit anderen Worten der Abstand den Wert Null annehmen, wenn keine Lage die Vorverfestigungseinheit passiert. Beim Passieren einer oder mehrerer Lagen können die Bänder in diesem Bereich wieder einen Abstand bereits aufgrund der Flexibilität zumindest eines der Bänder einnehmen, ohne dass hierzu eine Verlagerung der Vorverfestigungseinheit zwingend erforderlich ist.

Die beiden Kompaktierungseinrichtungen können entweder beide auf ein und dasselbe des ersten und zweiten Bandes wirken. Oder eine der beiden Kompaktierungseinrichtungen wirkt auf das eine und die andere der beiden Kompaktierungseinrichtungen wirkt auf das andere Band.

Die Vorverfestigungseinheit umfasst des Weiteren eine zwischen den Kompaktierungseinrichtungen angeordnete Verfestigungseinrichtung, erfindungsgemäß eine Wasserstrahlverfestigungseinrichtung, mittels welcher die beiden Lagen durch Verwirbelung der Fasern miteinander verfestigbar sind. Die Verfestigungseinrichtung ist vorzugsweise derart ausgebildet, dass die Verwirbelung der Fasern nicht etwa flächig über den gesamten Bereich, in dem auch die Kompaktierung stattfindet, erzielt wird, sondern lediglich in einem Teilbereich, insbesondere linienhaft mittels eines sich quer zur Produktionsrichtung erstreckenden Düsenbalkens.

Die Kompaktierungseinrichtung und die Verfestigungseinrichtung sind des Weiteren erfindungsgemäß derart in die Anlage integriert, dass sie sich stets gemeinsam im Betriebszustand oder im Ruhezustand befinden. Im Betriebszustand befinden sich die Einrichtungen vorzugsweise immer dann, wenn die Kurzfasern umfassende Lage durch das Ablageband übergeben wird.

Aufgrund der Anordnung der Verfestigungseinrichtung zwischen den Kompaktierungseinrichtungen und der damit verbundenen zeitgleichen Verfestigung mit der Kompaktierung wird eine Erholung der Langfasern umfassenden Lage vermieden, so dass durch Einsatz der erfindungsgemäßen Anlage bzw. durch Anwendung des erfindungsgemäßen Verfahrens die Gefahr von fehlerhaft ausgebildeten, zwei Lagen aufweisenden Vliesbahnen wesentlich reduziert ist.

Eine erste bevorzugte Ausführungsform einer erfindungsgemäßen Anlage umfasst eine Vorverfestigungseinheit, bei welcher die Kompaktierungseinrichtungen jeweils eine Druckwalze umfassen.

Es hat sich jedoch gezeigt, dass der Fertigungsaufwand einer erfindungsgemäßen Anlage ohne Einschränkung ihrer Funktionalität reduzierbar ist, wenn - wie bei einer zweiten Ausführungsform - die Kompaktierungseinrichtungen der Vorverfestigungseinheit jeweils einen Druckbalken umfassen.

Die Kompaktierungseinrichtungen der Vorverfestigungseinheit können derart angeordnet sein, dass sie im Betriebszustand an dem ersten Band anliegen und es vorzugsweise parallel in dem Bereich, in dem die Vorverfestigungseinheit wirkt, zum zweiten Band hin verlagern.

Handelt es sich bei der in Produktionsrichtung ersten Kompaktierungseinrichtung um eine Druckwalze, so ist die Führung des zweiten Bandes vorzugsweise so gewählt, dass der Abstand der sich quer zur Produktionsrichtung erstreckenden Linie, entlang der das zweite Band den Außenumfang der Druckwalze zuerst berührt, zur Oberseite des ersten Bandes mindestens der Dicke der Faserlagen entspricht. Typischerweise beträgt dieser Abstand 15 mm, 20 mm oder mehr. Aufgrund dieser Ausgestaltung wird eine unerwünschte Kompaktierung der Lagen vor der Übergabestelle vermieden.

Bei einer besonders bevorzugten Ausführungsform sind in Produktionsrichtung gesehen vor der Vorverfestigungseinheit und/oder in Produktionsrichtung gesehen hinter der Vorverfestigungseinheit von dem zweiten Band umlaufene untere Rollen angeordnet. Aufgrund dieser Maßnahme wird eine Verbesserung der Führung des zweiten Bandes erzielt, die den mit der erfindungsgemäßen Anlage erzielbaren Vorverfestigungsprozess verbessern kann.

Besonders bevorzugt ist eine Ausführungsform, bei welcher die unteren Rollen derart angeordnet sind, dass Übergabeband zum ersten Band zwischen den unteren Rollen und den diesen benachbarten Kompaktierungseinrichtungen einen Einlaufwinkel α zwischen 1° und 10° und einen Auslaufwinkel α' von größer 1° aufweisen. Es hat sich gezeigt, dass sich bei einem Einlaufwinkel in diesem Größenbereich mit der Vorverfestigungseinheit ein besonders gutes Ergebnis erzielen lässt, die Größe des Auslaufwinkels für das Ergebnis aber nur von geringerer Bedeutung ist.

Bei einer weiteren, besonders bevorzugten Ausführungsform wirkt die in Produktionsrichtung gesehen erste Kompaktierungseinrichtung von oben gegen das untere Trum des Übernahmebandes und die in Produktionsrichtung gesehen zweite Kompaktierungseinrichtung wirkt von unten gegen das obere Trum des ersten umlaufenden Bandes.

Aufgrund dieser Maßnahme erfährt das erste umlaufende Band beim Passieren der zweiten Kompaktierungseinrichtung eine Richtungsänderung. Sie beträgt vorzugsweise mindestens 1° Überraschender Weise hat sich gezeigt, dass hierdurch die unerwünschte Tendenz des Anhaftens der vorverfestigten Lagen an dem Übernahmeband verringert ist

Die erste Kompaktierungseinrichtung umfasst bei einer bevorzugten Ausführungsform eine erste untere Druckwalze.

Bei einer besonders bevorzugten, zweiten Ausführungsform umfasst die zweite Kompaktierungseinrichtung eine Saugkammer. Die Tendenz des Anhaftens der vorverfestigten Lagen an dem Übernahmeband ist dann abermals wesentlich verringert.

Die Saugkammer umfasst dann vorzugsweise mindestens eine Anlagefläche für das erste umlaufende Band, und weiterhin vorzugsweise eine Ansaugöffnung.

Bei einer weiteren, bevorzugten Ausführungsform umfasst die zweite Kompaktierungseinrichtung eine Druckrolle, die in identischer Weise wir die erste untere Druckwalze ausgebildet sein kann.

In diesem Fall ist vorzugsweise in Produktionsrichtung - vorzugsweise unmittelbar - hinter der Druckrolle eine Saugkammer vorgesehen. Oder die Druckrolle ist als Saugrolle ausgebildet, mittels welcher ein Luftstrom durch das erste umlaufende Band erzeugt werden kann.

Die Wasserstrahlverfestigungseinrichtung weist einen Düsenbalken auf, welcher vorzugsweise an eine Druckquelle angeschlossen ist, mittels der Wasser unter einem Druck zuleitbar ist, der bis zu 100 bar betragen kann, meist jedoch deutlich darunter liegt, beispielsweise maximal 30 bar beträgt oder darunter, je nach den aufgrund von Eigenschaften der Kurz- und der Langfasern für die Vorverfestigung beeinflussten Erfordernisse. Der Düsenbalken gibt vorzugsweise Wasserstrahlen mit Durchmessern ab, die typischerweise zwischen 80 und 180 Mikrometer betragen.

Der Düsenbalken ist vorzugsweise innerhalb des Übergabebandes angeordnet, und weist - besonders bevorzugt - zu den Kompaktierungseinheiten in Produktionsrichtung gesehen denselben Abstand auf.

Wenn - wie bevorzugt - die Einrichtung, mit welcher Abgabetrum und Aufnahmetrum zwischen der Übernahmeposition und der Ruheposition innerhalb des Übernahmebandes angeordnet ist, kann der Platzbedarf der erfindungsgemäßen Vorrichtung reduziert werden. Zudem steht dann der von dem Ablageband umgebene Raum für weitere Maschinenkomponenten, wie bspw. Absaugvorrichtungen zum Absaugen von Prozesswasser, zur Verfügung.

Besonders bevorzugt ist eine Ausgestaltung der erfindungsgemäßen Anlage, bei der die Einrichtung ein im Bereich des Aufnahmetrums am Übernahmeband anliegendes oder in Anlage bringbares, mit einer Bewegungskomponente senkrecht zum Aufnahmetrum verlagerbares, erstes Führungsmittel umfasst. Um das Aufnahmetrum in die Übernahmeposition zu bringen, ist es dann erforderlich, dass Führungsmittel in Richtung des Aufnahmetrums zu verlagern. In der Übernahmeposition liegt es somit zwangsläufig am Übernahmeband an. Zum Verlagern des Aufnahmetrums in die Ruheposition ist das Führungsmittel dann in entgegengesetzter Richtung zu verlagern, wobei es in der Ruheposition zwar am Übernahmeband anliegen kann, dies jedoch nicht erforderlich ist.

Das Übernahmeband ist vorzugsweise zumindest gasdurchlässig ausgebildet. Unter "zumindest gasdurchlässig" ist zu verstehen, dass auch eine zusätzlich wasserdurchlässige Ausbildung des Übernahmebandes wünschenswert sein kann, beispielsweise, wenn das Übernahmeband für Wasserstrahlen zum Zwecke der Ablösung und/oder der Verfestigung der Lage von Fasern durchdringbar sein muss.

Die Gasdurchlässigkeit des Übernahmebandes ist insbesondere dann erforderlich, wenn die Einrichtung - wie des Weiteren bevorzugt - eine wahlweise aktivierbare, im Bereich des Aufnahmetrums vom Übernahmeband her saugende Saugvorrichtung umfasst. Aufgrund dieser Maßnahme kann der Übergabeprozess der Lage von Fasern bei in der Übernahmeposition befindlichen Abgabe- und Aufnahmetrum unterstützt werden, da die Lage von Fasern aufgrund der mittels der Saugvorrichtung hervorgerufenen Luftströmung durch das Übernahmeband angesaugt werden.

Besonders bevorzugt ist eine Weiterbildung der erfindungsgemäßen Vorrichtung, bei der die Einrichtung im Bereich des Aufnahmetrums am Übernahmeband anliegendes oder in Anlage bringbares, mit einer Bewegungskomponente senkrecht zum Aufnahmetrum verlagerbares, in Umlaufrichtung des Übernahmebandes vom ersten Führungsmittel beabstandetes, zweites Führungsmittel umfasst. Aufgrund dieser Maßnahme ist es möglich, das Übernahmeband über eine größere Länge relativ zum Abgabetrum des Ablagebandes zu verlagern und auch die Richtungen, in die sich Abgabetrum und Aufnahmetrum relativ zueinander erstrecken, im Sinne der Anpassung an eine optimale Übergabe der Lage von Fasern anzupassen.

Es hat sich gezeigt, dass bei Vorhandensein eines zweiten Führungsmittels die Saugvorrichtung in Umlaufrichtung des Übergabebandes vorzugsweise zwischen dem ersten und dem zweiten Führungsmittel angeordnet ist.

Zur Verlagerung des Aufnahmetrums relativ zum Abgabetrum besonders geeignet ist die Einrichtung dann, wenn sie eine Tragstruktur umfasst, die relativ zum Aufnahmetrum motorisch parallel verschiebbar und/oder verschwenkbar angeordnet ist.

Wenn - wie des Weiteren bevorzugt - eine Faserauffangvorrichtung vorgesehen ist, gelangen nahezu sämtliche der vom Stoffauflauf abgegebenen Fasern in der Faser-Auffangvorrichtung, wenn sich Abgabe- und Aufnahmetrum in der Ruheposition befinden, in der keine Übergabe von Fasern bzw. der von dieser gebildeten Lage an das Übernahmeband erfolgt. Dabei ist die Faserauffangvorrichtung vorzugsweise derart ausgebildet, dass die aufgefangenen Fasern in den Herstellungsprozess rückführbar sind. Ein besonderer Vorteil des Vorsehens der Faserauffangvorrichtung besteht auch darin, dass die erfindungsgemäße Anlage eine Einrichtung zur Reduzierung der Breite der die Kurzfasern umfassenden Lage durch Abtrennen von einem oder beiden Randbereichen der Lage - insbesondere im Bereich der Einrichtung, mit welcher Abgabetrum und Aufnahmetrum zwischen der Übergabe- und der Ruheposition verlagerbar sind - umfassen kann, und die abgetrennten Randbereiche bzw. die diese bildenden Kurzfasern von der Auffangvorrichtung aufgefangen werden.

Verläuft das Abgabetrum des Ablagebandes - wie bevorzugt - in Umlaufsrichtung schräg abfallend und ist von einer Umlenkrolle begrenzt, über die das Ablageband um einen Umlenkwinkel in ein Rückführtrum umgelenkt ist, ist die Auffangvorrichtung vorzugsweise unterhalb der Umlenkrolle angeordnet.

Um den Anteil von am Rückführtrum anhaftenden Fasern zu reduzieren, beträgt der Umlenkwinkel vorzugsweise mehr als 90°.

Umfasst die erfindungsgemäße Anlage, wie bevorzugt, eine Kardiereinheit zur Bereitstellung der die Langfasern umfassenden Lage, so kann diese Inline bereitgestellt werden. Wenn mittels der Kardiereinheit - -wie bevorzugt - Langfasern umfassende Lagen unterschiedlicher Breite bereitstellbar sind, so wird mit der Einrichtung zur Reduzierung der Breite der die Kurzfasern umfassenden Lage deren Breite vorzugsweise derart eingestellt, dass diese maximal so breit ist wie die langfasern umfassende Lage. Auf diese Weise wird verhindert, dass Kurzfasern an dem ersten umlaufenden Band anhaften.

In der Zeichnung ist - rein schematisch - eine Anlage zur Herstellung einer Vliesbahn mit verschiedenen Ausführungsbeispielen einer erfindungsgemäßen Vorrichtung dargestellt. Es zeigen:
- Fig. 1: ein erstes Ausführungsbeispiel in Übernahmeposition und ausschnittsweise in Ruheposition;
- Fig. 1a: ein Detail aus Fig. 1;
- Fig. 2: ein zweites Ausführungsbeispiel in Übernahmeposition und ausschnittsweise in Ruheposition;
- Fig. 3: ein drittes Ausführungsbeispiel in Übernahmeposition und ausschnittsweise in Ruheposition;
- Fig. 4: den Ausschnitt IV in Fig. 3;
- Fig. 5: ein viertes Ausführungsbeispiel der erfindungsgemäßen Anlage;
- Fig. 6: eine Teildarstellung einer ersten Vorverfestigungseinheit (Ausschnitt VI in Fig. 5) des vierten Ausführungsbeispiels;
- Fig. 7: eine Fig. 6 entsprechende Teildarstellung einer zweiten Vorverfestigungseinheit;
- Fig. 8: eine Fig. 6 entsprechende Teildarstellung einer dritten Vorverfestigungseinheit; sowie
- Fig. 9: eine Fig. 6 entsprechende Teildarstellung der ersten Vorverfestigungseinheit mit einer geänderten Führung des oberen Trums des ersten umlaufenden Bandes.

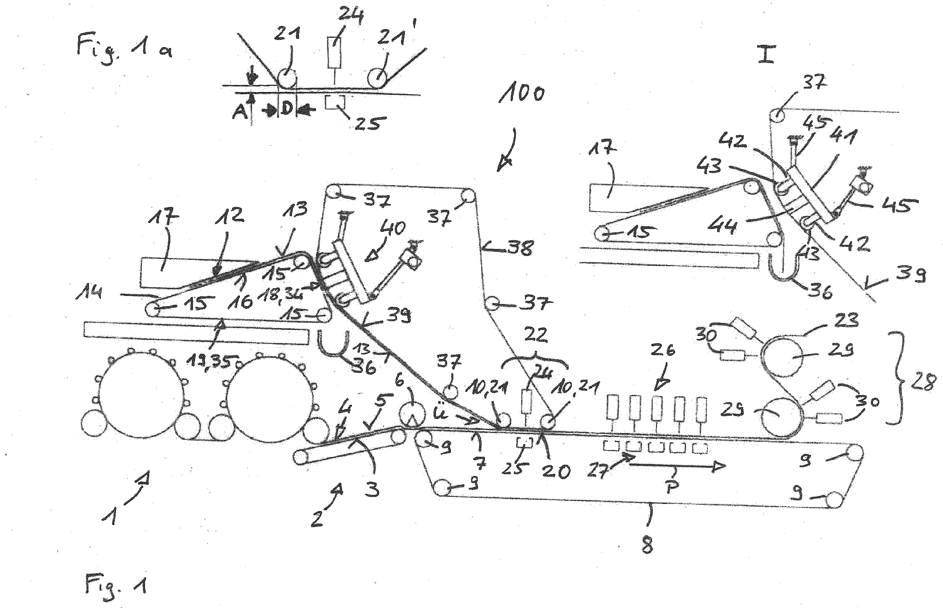

Die in Fig. 1 dargestellte Anlage zur Herstellung einer Vliesbahn 23, die insbesondere ein Flächengewicht zwischen 20 und 150 Gramm pro Quadratzentimeter, insbesondere zwischen 40 und 70 Gramm pro Quadratzentimeter aufweisen kann, umfasst eine erste Ausführungsform einer Vorrichtung (Vorrichtung 100) zur Bereitstellung einer Lage 13 von Fasern 12, insbesondere von Kurzfasern einer mittleren Länge zwischen 1 mm und 10 mm und bspw. einem Flächengewicht zwischen 5 und 50 Gramm pro Quadratmeter, deren Aufbau und Funktionsweise weiter unten im Einzelnen beschrieben ist.

Die Anlage umfasst des Weiteren eine Kardiereinheit 1, mit welcher eine Lage 5 von Langfasern insbesondere einer Länge zwischen 10 mm und 150 mm und bspw. einem Flächengewicht zwischen 15 und 50 Gramm pro Quadratzentimeter herstellbar ist.

Die Kardiereinheit 1 umfasst ein umlaufendes Ablageband 2 mit einem oberen Trum 3, auf welchem die Langfasern 12 zur Bildung der Lage 13 ablegbar sind.

Die Anlage umfasst ferner eine Saugwalze 6, mit welche die Lage 5 einem oberen Trum 7 eines ersten um Rollen 9 im Uhrzeigersinn umlaufenden Bandes 8 übergebbar ist. Das obere Trum 7 bewegt sich in Richtung des in der Zeichnung eingezeichneten Pfeiles, der somit die Produktionsrichtung P symbolisiert.

Das erste umlaufende Band 8 ist flüssigkeits- und gasdurchlässig, bspw. als Siebband, ausgebildet.

Die Vorrichtung 100 zur Bereitstellung der Lage 13 von Fasern 12 umfasst ein Ablageband 14, welches um Rollen 15 im Uhrzeigersinn umläuft.

Das Ablageband 14 ist wiederum flüssigkeits- und gasdurchlässig, bspw. als Siebband, ausgebildet. Aufgrund der Anordnung der Rollen 15 bildet es einen in Umlaufrichtung gesehen ansteigenden Bereich 16 aus, in welchem von einem Stoffauflauf 17 die Fasern 12 - bspw. als wässrige Emulsion - zur Bildung der Lage 13 abgelegt werden.

Das Ablageband 14 umfasst des Weiteren einen in Umlaufrichtung schräg abfallenden Bereich 18, der ein Abgabetrum 34 bildet. Über eine nachfolgende Rolle 15 ist das Ablageband 14 in einem horizontalen Bereich 19 geführt, der ein Rückführtrum 35 bildet.

Unterhalb der Rolle 15, an welcher das Abgabetrum 34 in das Rückführtrum 35 übergeht, ist eine Faserauffangvorrichtung 36 angeordnet.

Die Vorrichtung 100 umfasst des Weiteren ein entgegen dem Uhrzeigersinn um obere Rollen 37 und untere Rollen 21 umlaufendes Übernahmeband 38, welches ein Aufnahmetrum 39 aufweist. Innerhalb des von dem Übernahmeband 38 begrenzten Raumes ist eine Einrichtung 40 vorgesehen, mit welcher das Aufnahmetrum 39 zwischen einer Übernahmeposition, in welcher ein Teil des Aufnahmetrums 39 zumindest nahezu am Abgabetrum 34 des Abgabebandes 14 anliegt und zumindest ein wesentlicher Anteil der Fasern 12 der Lage 13 vom Abgabetrum 34 dem Aufnahmetrum 39 übergeben wird, und einer Ruheposition, in welcher das Aufnahmetrum 39 von dem Abgabetrum 34 beabstandet ist und zumindest ein wesentlicher Anteil der Fasern nicht dem Aufnahmetrum übergeben wird, verlagerbar ist. In Fig. 1 ist die Ruheposition im Ausschnitt I verdeutlicht.

Die Einrichtung 40 umfasst eine Tragstruktur 41, an welcher zwei bezogen auf die Umlaufrichtung des Übernahmebandes 38 voneinander beabstandete Führungsmittel 42 angeordnet sind. Sie umfassen jeweils eine Rolle 43, die von innen am Aufnahmetrum 39 des Übernahmebandes 38 anliegt. In Umlaufrichtung des Übernahmebandes 38 gesehen zwischen den Führungsmitteln 42 ist eine wahlweise aktivierbare Saugvorrichtung 44 vorgesehen, mittels welcher Luft durch das Übernahmeband 38 und somit die Fasern 12 bzw. die Lage 13 an das Übernahmeband 38 angesaugt werden können.

Die Tragstruktur 41 ist über Anlenkeinheiten 45, von denen zumindest eine längenvariabel ausgebildet ist, an einem in der Zeichnung nicht dargestellten Maschinengestell angelenkt, sodass die Einrichtung 40 zwischen einer Lage, an welcher sich das Übernahmeband 38 in der Übernahmeposition, und einer Lage, in welcher sich das Übernahmeband in der Ruheposition befindet, verlagerbar ist.

Wie in dem Ausschnitt I erkennbar ist, werden die die Lage 13 bildenden Fasern 12 in der Ruheposition nicht dem Übernahmeband 38 übergeben, sondern gelangen vom Abgabetrum 34 des Ablagebandes 14 in die Faserauffangvorrichtung 36.

Befindet sich das Aufnahmetrum in der Übergabeposition, so gelangen die Fasern 12 durch in Kontaktkommen mit dem Aufnahmetrum 39, bedarfsweise unterstützt durch die Wirkung der Saugvorrichtung 44, auf das Übernahmeband 38. Von diesem gelangen die Fasern 12 bzw. die Lage 13 zu einem unteren Trum 20 des Übernahmebandes 38, welches zwischen den unteren Rollen 21 gebildet ist.

Bei der in Fig. 1 dargestellten Anlage bilden die unteren Rollen 21, 21' Kompaktierungseinrichtungen 10, 10' und sind Teil einer Vorverfestigungseinheit 22. Sie befinden sich im Betrieb der Anlage relativ zum oberen Trum des ersten umlaufenden Bandes 8 in einer Position, in der der Abstand zwischen dem unteren Trum 20 des zweiten umlaufenden Bandes 14 und dem oberen Trum 7 des ersten umlaufenden Bandes 8 kleiner ist als die Summe der Dicken der Lagen 5 und 13. Die beiden Bänder können sich in diesem Bereich auch kontaktieren, mit anderen Worten der Abstand den Wert Null annehmen, wenn keine Lage die Vorverfestigungseinheit 22 passiert. Beim Passieren einer oder mehrerer Lagen können die Bänder wieder einen Abstand bereits aufgrund einer Flexibilität des ersten umlaufenden Bandes 8 einnehmen, ohne dass hierzu eine Verlagerung der Vorverfestigungseinheit zwingend erforderlich ist.

Wie in Fig. 1a verdeutlicht ist, weist zumindest die in Produktionsrichtung erste Rolle 21 einen Durchmesser D auf. Er ist größer oder gleich als ein Zwanzigstel der Länge der Druckwalze quer zur Produktionsrichtung. Die Führung des zweiten Bandes ist so gewählt, dass die sich quer zur Produktionsrichtung erstreckende Linie, entlang der das zweite Band den Außenumfang der Rolle 21 zuerst berührt, einen Abstand A aufweist.

Die Übergabe der Lage 13 auf die Lage 5 erfolgt aufgrund der Anordnung der Rollen 15 und der unteren Rollen 21 an einer Übergabestelle Ü, die in Produktionsrichtung P gesehen vor der in der Zeichnung links dargestellten unteren Rolle 21 liegt. Da der Abstand zwischen dem oberen Trum 7 und dem unteren Trum 20 kleiner als die Summe der Dicken der beiden Lagen 5 und 13 ist, erfahren die beiden Lagen beim Passieren des Bereichs zwischen den beiden unteren Rollen 21 eine erste flächige Kompaktierung auf dem Weg zur Bildung einer Fließbahn 23. Die Größe der Fläche ist hierbei abhängig vom Abstand der beiden unteren Rollen 21 in Produktionsrichtung P.

Damit die gewünschte Kompaktierung erfolgen kann, müssen die ersten und zweiten Bänder 8, 14 mit identischen Geschwindigkeiten umlaufen, damit es während der Kompaktierung nicht zu Reibungen kommt, die den Kompaktierungsprozess negativ beeinflussen könnten.

Damit die beiden Lagen 5, 13 nach verlassen des Bereichs zwischen dem oberen Trum 7 und dem unteren Trum 20 für weitere Bearbeitungsschritte zur Ausbildung der Fließbahn eine ausreichende Festigkeit aufweisen, umfasst die Verfestigungseinheit 22 einen in Produktionsrichtung P zwischen den beiden unteren Rollen 21 und innerhalb des zweiten umlaufenden Bandes 14 angeordneten Düsenbalken 24, der eine Verfestigungseinrichtung bildet, und eine in Produktionsrichtung an entsprechender Stelle angeordnete, innerhalb des ersten umlaufenden Bandes 8 angeordnete Auffangvorrichtung 25, die einen Saugkasten umfassen kann. Der Düsenbalken 24 umfasst auf seiner dem unteren Trum 20 zugewandten Seite eine Mehrzahl von Düsen, aus welchen während des Betriebs der Anlage 1 Wasserstrahlen unter Druck austreten und durch das untere Trum 20 des zweiten umlaufenden Bandes 14 die beiden Lagen 5 und 13 durch Verwirbelung von Fasern verfestigen. Die Auffangvorrichtung 25 dient dem Auffangen zumindest eines Teils des vom Düsenbalken 24 abgegebenen Wassers, das hiernach - ggf. nach einer Aufbereitung - dem Produktionsprozess wieder zugeführt werden kann.

Aufgrund der Anordnung der Verfestigungseinrichtung zwischen den Kompaktierungseinrichtungen und der damit verbundenen zeitgleichen Verfestigung mit der Kompaktierung wird eine Erholung der Langfasern umfassenden Lage vermieden, so dass durch Einsatz der erfindungsgemäßen Anlage bzw. durch Anwendung des erfindungsgemäßen Verfahrens die Gefahr von fehlerhaft ausgebildeten, zwei Lagen aufweisenden Vliesbahnen wesentlich reduziert ist.

Zur weiteren Verfestigung und Kompaktierung sind außerhalb des zweiten umlaufenden Bandes eine Mehrzahl von Düsenbalken 26 und Auffangvorrichtungen 27 vorgesehen, um die Lagen 5 und 13 zusätzlich von oben zu verfestigen.

In Produktionsrichtung P nachfolgend ist eine weitere Verfestigungseinrichtung 28 vorgesehen. Sie umfasst zwei Verfestigungstrommeln 29, die von den Lagen 5 und 13 im Betrieb derart umlaufen werden, dass jede der beiden Lagen an einer der beiden Verfestigungstrommeln über einen Winkelbereich von etwa 120° anliegen. Pro Verfestigungstrommel 29 sind zwei weitere Düsenbalken 30 vorgesehen, die in einem Bereich wirken, in dem die Lagen 5, 13 an den Verfestigungstrommeln 29 anliegen.

Die Verfestigungstrommeln weisen jeweils eine gas- und flüssigkeitsdurchlässige Mantelfläche auf, sodass zumindest ein Teil des während des Betriebs von den Düsenbalken 30 abgegebenen Wassers durch die Verfestigungstrommeln absaugbar und ebenfalls - ggf. nach einer Aufbereitung - dem Produktionsprozess wieder zuführbar ist. Die Verfestigungseinrichtung 28 dient der weiteren Verfestigung der beiden Lagen 5 und 13 zur Vliesbahn 23, die nach Durchlaufen der Verfestigungseinrichtung weiteren Bearbeitungsschritten zugeführt werden kann.

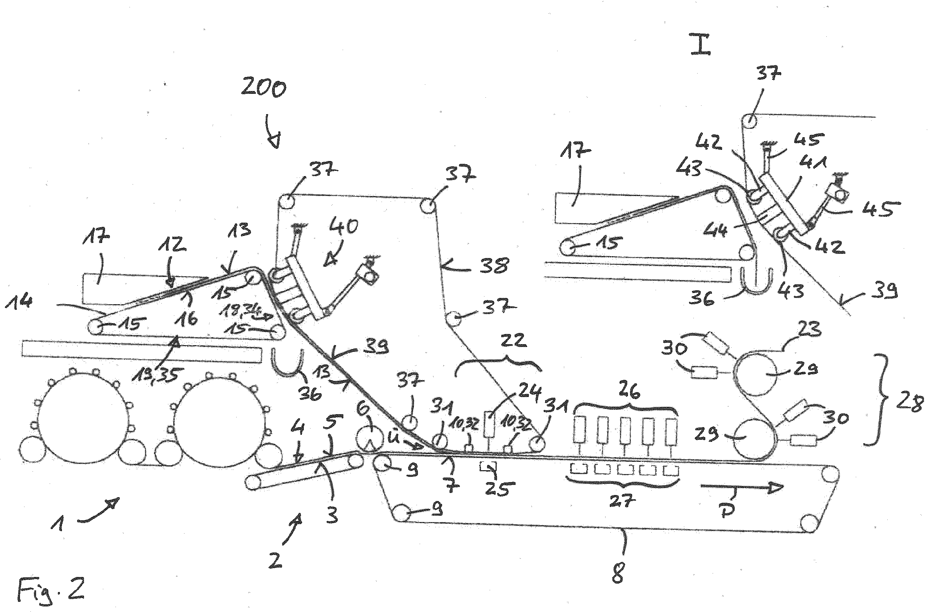

In Fig. 2 ist dieselbe Anlage mit einer zweiten Ausführungsform der erfindungsgemäßen Vorrichtung (Vorrichtung 200) dargestellt. Nachfolgend sind lediglich die Unterschiede zur Vorrichtung 100 beschrieben. Zwecks Vermeidung von Wiederholungen wird ansonsten auf die Ausführungen zur Vorrichtung 100 verwiesen, die auch für die Vorrichtung 200 gelten.

Anstatt der unteren Rollen 21 umfasst die Vorrichtung 200 untere Rollen 31, die zueinander in Produktionsrichtung P und auch zum oberen Trum 7 des ersten umlaufenden Bandes 8 einen größeren Abstand als die unteren Rollen 21 aufweisen. Die unteren Rollen 31 sind nicht Bestandteil der Vorverfestigungseinheit 22. Diese wird bei der Anlage 200 gebildet von zwei parallel zueinander und senkrecht zur Produktionsrichtung P angeordneten Druckbalken 32, die entsprechend der unteren Rollen 21 in der Anlage 100 angeordnet sind und deren Funktion in der Vorverfestigungseinheit 22 ersetzen. Die Druckbalken können in den Bereichen, in denen sie mit dem umlaufenden Band 14 in Kontakt kommen, mit Kunststoffkappen oder mit keramischen Überzügen versehen sein, um die Reibung mit dem umlaufenden Band 14 zu reduzieren.

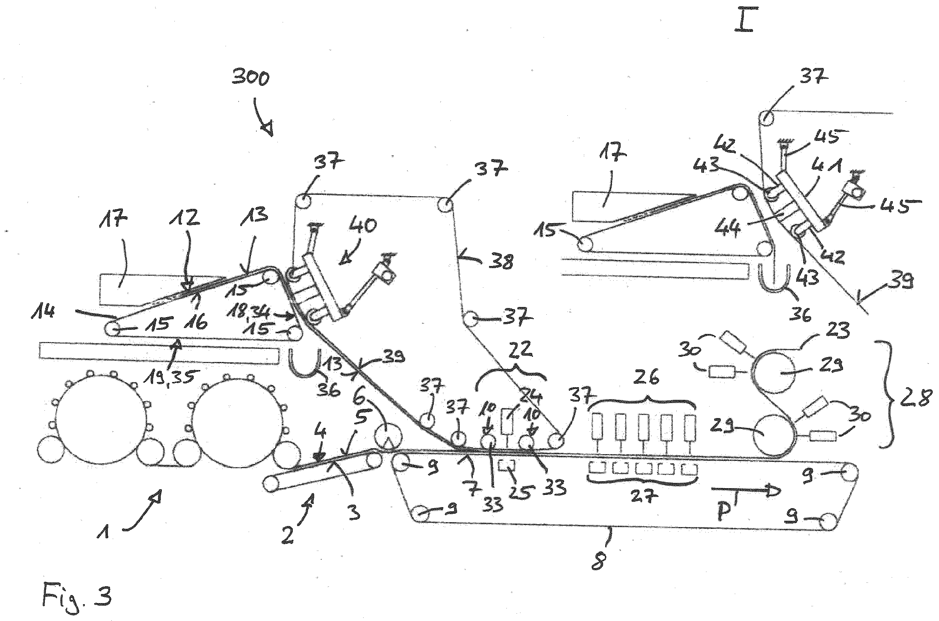

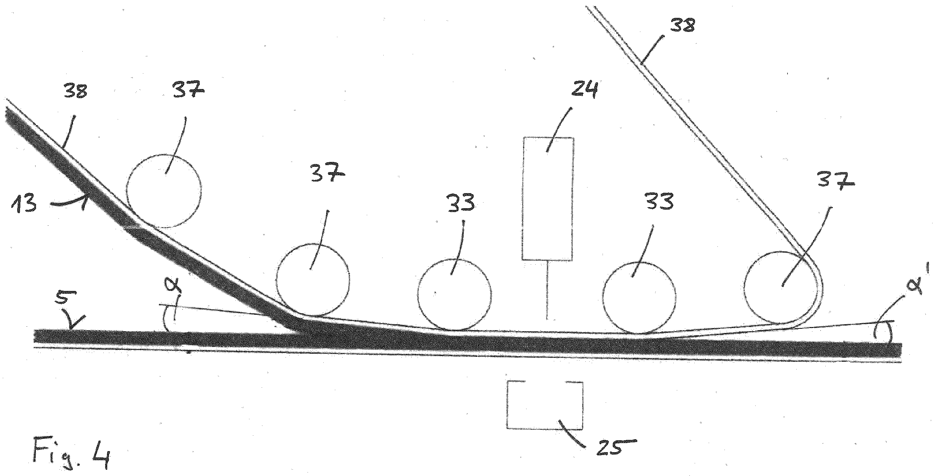

Da die unteren Rollen 31 in einem größeren Abstand zum oberen Trum 7 angeordnet sind, verläuft das zweite umlaufende Band 14 zwischen den Umlenkrollen 31 und dem jeweiligen Druckbalken unter Bildung von Winkel α, α', die insbesondere zwischen 1° und 10° betragen können, wie dies in Fig. 4 im Zusammenhang mit der in Fig. 3 dargestellten dritten Ausführungsform der erfindungsgemäßen Vorrichtung (Vorrichtung 300) verdeutlicht ist. Es sei darauf hingewiesen, dass für das Herstellungsergebnis die Größe des Einlaufwinkels α erheblich bedeutsamer ist als die Größe des Auslaufwinkels α', so dass dieser auch erheblich größer bis hin zu Werten größer als 90° ausgebildet sein kann.

Nachfolgend werden lediglich die Unterschiede der Vorrichtung 300 zur Vorrichtung 200 beschrieben. Insofern wird zwecks Vermeidung von Wiederholungen auf die Ausführungen zur Vorrichtung 200 und darüber hinaus zur Vorrichtung 100 verwiesen.

Bei der Vorrichtung 300 sind die beiden Druckbalken 32 durch Druckwalzen 33 ersetzt. Diese Ausbildung empfiehlt sich insbesondere, wenn mittels der Vorverfestigungseinheit 22 höhere Druckkräfte zur Kompaktierung aufgebracht werden sollen, da dies bei der Vorrichtung 200 zu einer unerwünschten Erhöhung der Reibung zwischen den Druckbalken 32 und dem zweiten umlaufenden Band 14 führen kann.

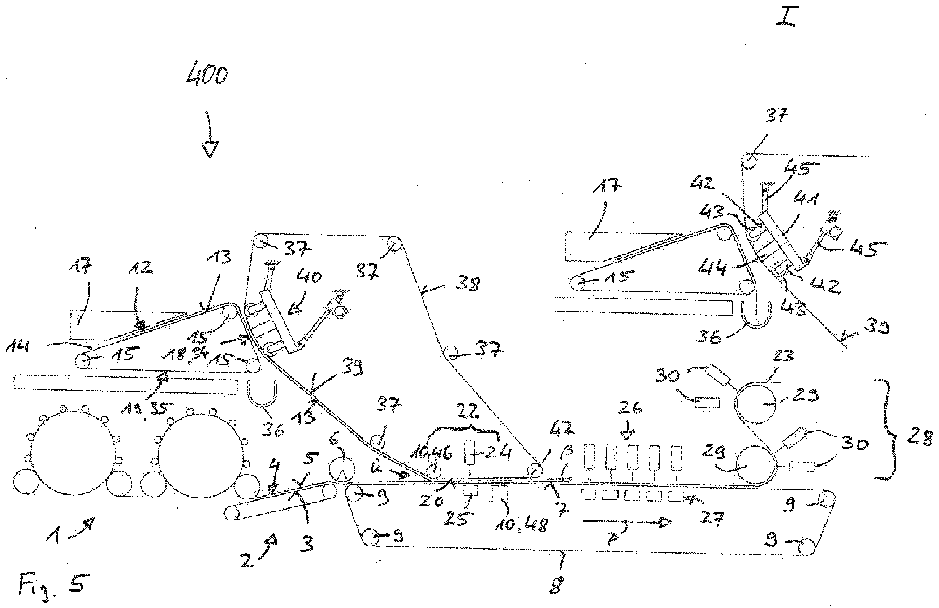

Die in Fig. 5 dargestellte Anlage zur Herstellung einer Vliesbahn 23, die insbesondere ein Flächengewicht zwischen 20 und 150 Gramm pro Quadratzentimeter, insbesondere zwischen 40 und 70 Gramm pro Quadratzentimeter aufweisen kann, umfasst eine vierte Ausführungsform einer Vorrichtung (Vorrichtung 400) zur Bereitstellung einer Lage 13 von Fasern 12, insbesondere von Kurzfasern einer mittleren Länge zwischen 1 mm und 10 mm und bspw. einem Flächengewicht zwischen 5 und 50 Gramm pro Quadratmeter, deren Aufbau und Funktionsweise weiter unten im Einzelnen beschrieben ist.

Die Anlage umfasst des Weiteren eine Kardiereinheit 1, mit welcher eine Lage 5 von Langfasern insbesondere einer Länge zwischen 10 mm und 150 mm und bspw. einem Flächengewicht zwischen 15 und 50 Gramm pro Quadratzentimeter herstellbar ist.

Die Kardiereinheit 1 umfasst ein umlaufendes Ablageband 2 mit einem oberen Trum 3, auf welchem die Langfasern 12 zur Bildung der Lage 13 ablegbar sind.

Die Anlage umfasst ferner eine Saugwalze 6, mit welcher die Lage 5 einem oberen Trum 7 eines ersten um Rollen 9 im Uhrzeigersinn umlaufenden Bandes 8 übergebbar ist. Das obere Trum 7 bewegt sich in Richtung des in der Zeichnung eingezeichneten Pfeiles, der somit die Produktionsrichtung P symbolisiert.

Das erste umlaufende Band 8 ist flüssigkeits- und gasdurchlässig, bspw. als Siebband, ausgebildet.

Die Vorrichtung 400 zur Bereitstellung der Lage 13 von Fasern 12 umfasst ein Ablageband 14, welches um Rollen 15 im Uhrzeigersinn umläuft.

Das Ablageband 14 ist wiederum flüssigkeits- und gasdurchlässig, bspw. als Siebband, ausgebildet. Aufgrund der Anordnung der Rollen 15 bildet es einen in Umlaufrichtung gesehen ansteigenden Bereich 16 aus, in welchem von einem Stoffauflauf 17 die Fasern 12 - bspw. als wässrige Emulsion - zur Bildung der Lage 13 abgelegt werden.

Das Ablageband 14 umfasst des Weiteren einen in Umlaufrichtung schräg abfallenden Bereich 18, der ein Abgabetrum 34 bildet. Über eine nachfolgende Rolle 15 ist das Ablageband 14 in einem horizontalen Bereich 19 geführt, der ein Rückführtrum 35 bildet.

Unterhalb der Rolle 15, an welcher das Abgabetrum 34 in das Rückführtrum 35 übergeht, ist eine Faserauffangvorrichtung 36 angeordnet.

Die Vorrichtung 400 umfasst des Weiteren ein entgegen dem Uhrzeigersinn um obere Rollen 37 und untere Rollen 21 umlaufendes Übernahmeband 38, welches ein Aufnahmetrum 39 aufweist. Innerhalb des von dem Übernahmeband 38 begrenzten Raumes ist eine Einrichtung 40 vorgesehen, mit welcher das Aufnahmetrum 39 zwischen einer Übernahmeposition, in welcher ein Teil des Aufnahmetrums 39 zumindest nahezu am Abgabetrum 34 des Abgabebandes 14 anliegt und zumindest ein wesentlicher Anteil der Fasern 12 der Lage 13 vom Abgabetrum 34 dem Aufnahmetrum 39 übergeben wird, und einer Ruheposition, in welcher das Aufnahmetrum 39 von dem Abgabetrum 34 beabstandet ist und zumindest ein wesentlicher Anteil der Fasern nicht dem Aufnahmetrum übergeben wird, verlagerbar ist. In Fig. 5 ist die Ruheposition im Ausschnitt I verdeutlicht.

Die Einrichtung 40 umfasst eine Tragstruktur 41, an welcher zwei bezogen auf die Umlaufrichtung des Übernahmebandes 38 voneinander beabstandete Führungsmittel 42 angeordnet sind. Sie umfassen jeweils eine Rolle 43, die von innen am Aufnahmetrum 39 des Übernahmebandes 38 anliegt. In Umlaufrichtung des Übernahmebandes 38 gesehen zwischen den Führungsmitteln 42 ist eine wahlweise aktivierbare Saugvorrichtung 44 vorgesehen, mittels welcher Luft durch das Übernahmeband 38 und somit die Fasern 12 bzw. die Lage 13 an das Übernahmeband 38 angesaugt werden können.

Die Tragstruktur 41 ist über Anlenkeinheiten 45, von denen zumindest eine längenvariabel ausgebildet ist, an einem in der Zeichnung nicht dargestellten Maschinengestell angelenkt, sodass die Einrichtung 40 zwischen einer Lage, an welcher sich das Übernahmeband 38 in der Übernahmeposition, und einer Lage, in welcher sich das Übernahmeband in der Ruheposition befindet, verlagerbar ist.

Wie in dem Ausschnitt I erkennbar ist, werden die die Lage 13 bildenden Fasern 12 in der Ruheposition nicht dem Übernahmeband 38 übergeben, sondern gelangen vom Abgabetrum 34 des Ablagebandes 14 in die Faserauffangvorrichtung 36.

Befindet sich das Aufnahmetrum in der Übergabeposition, so gelangen die Fasern 12 durch in Kontaktkommen mit dem Aufnahmetrum 39, bedarfsweise unterstützt durch die Wirkung der Saugvorrichtung 44, auf das Übernahmeband 38. Von diesem gelangen die Fasern 12 bzw. die Lage 13 zu einem unteren Trum 20 des Übernahmebandes 38, welches zwischen einer in Produktionsrichtung P ersten unteren Rolle 46 und einer in Produktionsrichtung P zweiten unteren Rolle 47 gebildet ist.

Bei der in Fig. 5 dargestellten Anlage bildet die erste untere Rolle 46 eine Kompaktierungseinrichtung 10 und ist Teil einer Vorverfestigungseinheit 22. Die erste untere Rolle 46 befindet sich im Betrieb der Anlage relativ zum oberen Trum des ersten umlaufenden Bandes 8 in einer Position, in der der Abstand zwischen dem unteren Trum 20 des Übernahmebandes 38 und dem oberen Trum 7 des ersten umlaufenden Bandes 8 kleiner ist als die Summe der Dicken der Lagen 5 und 13.

Eine weitere Kompaktierungseinrichtung 10', die ebenfalls Teil der Vorverfestigungseinheit 22 ist, bildet eine Saugkammer 48. Sie erstreckt sich parallel zur ersten unteren 46 etwa über zumindest die Breite des ersten umlaufenden Bandes 8. Die Saugkammer 48 weist obere, ebene Anlageflächen 49 auf, an denen das obere Trum 7 des ersten umlaufenden Bandes 8 mit seiner Unterseite anliegt. Zwischen den Anlageflächen 49 weist die Saugkammer 48 eine oder mehrere Ansaugöffnungen 50 auf. Die Saugkammer 48 ist derart angeordnet, dass das erste umlaufende Band 8 von der Saugkammer nach oben gedrückt wird, so dass das obere Trum 7 zwischen der ersten unteren Rolle 46 und der Saugkammer 48 parallel zum unteren Trum 20 des Übernahmebandes 38 verläuft. Die Vorverfestigungseinheit 22 erstreckt sich bei der Anlage 400 somit zwischen der ersten unteren Rolle 46 und der Saugkammer 48.

Die beiden Bänder können sich im Bereich der Vorverfestigungseinheit 22 auch kontaktieren, mit anderen Worten der Abstand den Wert Null annehmen, wenn keine Lage die Vorverfestigungseinheit 22 passiert. Beim Passieren einer oder mehrerer Lagen können die Bänder wieder einen Abstand bereits aufgrund einer Flexibilität des ersten umlaufenden Bandes 8 einnehmen, ohne dass hierzu eine Verlagerung der Vorverfestigungseinheit zwingend erforderlich ist.

In Produktionsrichtung gesehen hinter der Saugkammer 48 fällt das erste umlaufende Band 8 gegenüber dem unteren Trum 20 des Übernahmebandes 38 ab.

Somit vergrößert sich in Produktionsrichtung der Abstand zwischen den Bändern 8 und 38 somit hinter der Saugkammer 48, bevor das Übernahmeband 38 um die zweite untere Rolle 36 nach oben umgelenkt wird.

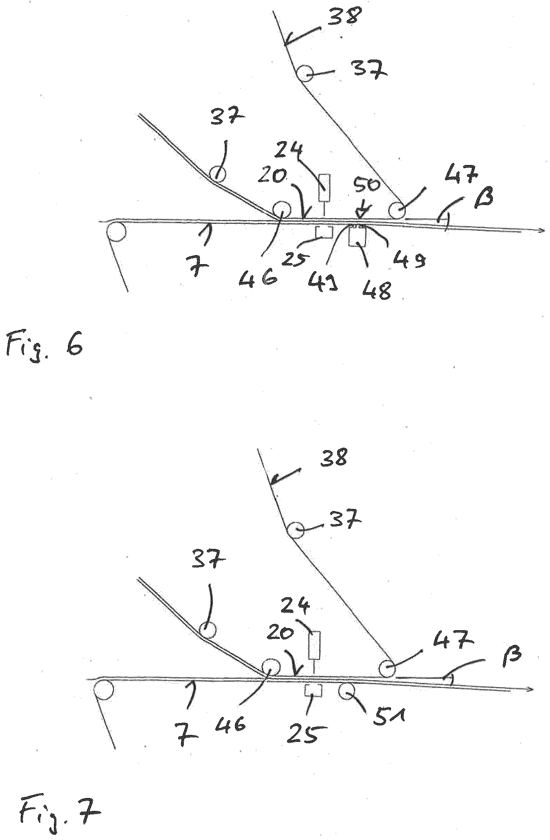

Diese erste Ausführung der Vorverfestigungseinheit 22 ist in Fig. 6 separat dargestellt.

Die Übergabe der Lage 13 auf die Lage 5 erfolgt an einer Übergabestelle Ü, die in Produktionsrichtung P vor der in der Zeichnung links dargestellten unteren Rolle 46 liegt. Da der Abstand zwischen dem oberen Trum 7 und dem unteren Trum 20 kleiner als die Summe der Dicken der beiden Lagen 5 und 13 ist, erfahren die beiden Lagen beim Passieren des Bereichs zwischen der unteren Rollen 46 und der Saugkammer 48 eine erste flächige Kompaktierung auf dem Weg zur Bildung einer Fließbahn 23. Die Größe der Fläche ist hierbei abhängig vom Abstand der ersten unteren Rolle 46 und der Saugkammer 48 in Produktionsrichtung P.

Damit die gewünschte Kompaktierung erfolgen kann, müssen das erste Band 8 und das Übernahmeband 38 mit identischen Geschwindigkeiten umlaufen, damit es während der Kompaktierung nicht zu Reibungen kommt, die den Kompaktierungsprozess negativ beeinflussen könnten.

Versuche haben überraschender Weise gezeigt, dass das Risiko des unerwünschten Anhaftens der Lage 13 an dem Übernahmeband 38 hinter der Vorverfestigungseinheit 22 reduziert ist, wenn die Vorverfestigungseinheit 22 in Produktionsrichtung von zwei Kompaktierungseinrichtungen 10, 10' begrenzt ist, von denen die erste auf das Übernahmeband 38, die zweite auf das erste umlaufende Band 8 derart wirken, dass das erste umlaufende Band 8 beim Passieren der weiteren Kompaktierungseinrichtung 10' eine Richtungsänderung im einen Winkel β von mindestens 1° erfährt. Bei der Anlage 400 ist das Risiko des Anhaftens weiterhin reduziert, indem die weitere Kompaktierungseinrichtung 10 als Saugkammer 48 ausgebildet ist, an der während des Betriebs der Anlage 400 ein Unterdruck anliegt, wodurch ein Luftstrom durch das erste umlaufende Band 8 erzeugt wird, der ein Ablösen der Lage 13 von dem Übernahmeband 38 unterstützt.

Damit die beiden Lagen 5, 13 nach Verlassen des Bereichs zwischen dem oberen Trum 7 und dem unteren Trum 20 für weitere Bearbeitungsschritte zur Ausbildung der Vliesbahn eine ausreichende Festigkeit aufweisen, umfasst die Verfestigungseinheit 22 einen in Produktionsrichtung P zwischen den beiden unteren Rollen 46, 47 und innerhalb des Übernahmebandes 38 angeordneten Düsenbalken 24, der eine Verfestigungseinrichtung bildet, und eine in Produktionsrichtung an entsprechender Stelle angeordnete, innerhalb des ersten umlaufenden Bandes 8 angeordnete Auffangvorrichtung 25, die einen Saugkasten umfassen kann. Der Düsenbalken 24 umfasst auf seiner dem unteren Trum 20 zugewandten Seite eine Mehrzahl von Düsen, aus welchen während des Betriebs der Anlage 1 Wasserstrahlen unter Druck austreten und durch das untere Trum 20 des Übernahmebandes 14 die beiden Lagen 5 und 13 durch Verwirbelung von Fasern verfestigen. Die Auffangvorrichtung 25 dient dem Auffangen zumindest eines Teils des vom Düsenbalken 24 abgegebenen Wassers, das hiernach - ggf. nach einer Aufbereitung - dem Produktionsprozess wieder zugeführt werden kann.

Aufgrund der Anordnung der Verfestigungseinrichtung zwischen den Kompaktierungseinrichtungen und der damit verbundenen zeitgleichen Verfestigung mit der Kompaktierung wird eine Erholung der Langfasern umfassenden Lage vermieden, so dass durch Einsatz der erfindungsgemäßen Anlage bzw. durch Anwendung des erfindungsgemäßen Verfahrens die Gefahr von fehlerhaft ausgebildeten, zwei Lagen aufweisenden Vliesbahnen wesentlich reduziert ist.

Zur weiteren Verfestigung und Kompaktierung sind außerhalb des zweiten umlaufenden Bandes eine Mehrzahl von Düsenbalken 26 und Auffangvorrichtungen 27 vorgesehen, um die Lagen 5 und 13 zusätzlich von oben zu verfestigen.

In Produktionsrichtung P nachfolgend ist eine weitere Verfestigungseinrichtung 28 vorgesehen. Sie umfasst zwei Verfestigungstrommeln 29, die von den Lagen 5 und 13 im Betrieb derart umlaufen werden, dass jede der beiden Lagen an einer der beiden Verfestigungstrommeln über einen Winkelbereich von etwa 120° anliegen. Pro Verfestigungstrommel 29 sind zwei weitere Düsenbalken 30 vorgesehen, die in einem Bereich wirken, in dem die Lagen 5, 13 an den Verfestigungstrommeln 29 anliegen.

Die Verfestigungstrommeln weisen jeweils eine gas- und flüssigkeitsdurchlässige Mantelfläche auf, sodass zumindest ein Teil des während des Betriebs von den Düsenbalken 30 abgegebenen Wassers durch die Verfestigungstrommeln absaugbar und ebenfalls - ggf. nach einer Aufbereitung - dem Produktionsprozess wieder zuführbar ist. Die Verfestigungseinrichtung 28 dient der weiteren Verfestigung der beiden Lagen 5 und 13 zur Vliesbahn 23, die nach Durchlaufen der Verfestigungseinrichtung weiteren Bearbeitungsschritten zugeführt werden kann.

Eine zweite Ausführungsform einer Vorverfestigungseinheit 22 der vierten Ausführungsform der Anlage 400 ist in Fig. 7 dargestellt. Zwecks Vermeidung von Wiederholungen sollen nur die Unterschiede zur ersten Ausführungsform der Vorverfestigungseinheit beschrieben werden. Gleiche Bezugszeichen bezeichnen gleiche Komponenten.

Bei der zweiten Ausführungsform der Vorverfestigungseinheit 22 ist anstatt der Saugkammer 48 eine Druckrolle 51 vorgesehen, die parallel zur ersten unteren Rolle 46 ausgerichtet ist, sich über die gesamte Breite des ersten umlaufenden Bandes 8 erstreckt und gegen dessen oberen Trum 7 von unten drückt, analog zur Saugkammer 48 bei der ersten Ausführungsform der Vorverfestigungseinheit 22.

Bei dieser zweiten Ausführungsform wird somit ein Ablösen der Lage 13 von dem Übernahmeband 38 in Produktionsrichtung P hinter der Druckrolle 51 allein durch die Richtungsänderung, die das erste umlaufende Band 8 beim Passieren der Druckrolle 51 erfährt, unterstützt. Erforderlichenfalls kann die Rolle 20 als Saugrolle ausgebildet sein, die mit einem Unterdruck beaufschlagbar ist, um eine zur Oberfläche der Saugrolle gerichteten Luftstrom durch das erste Band 8 zu erzeugen.

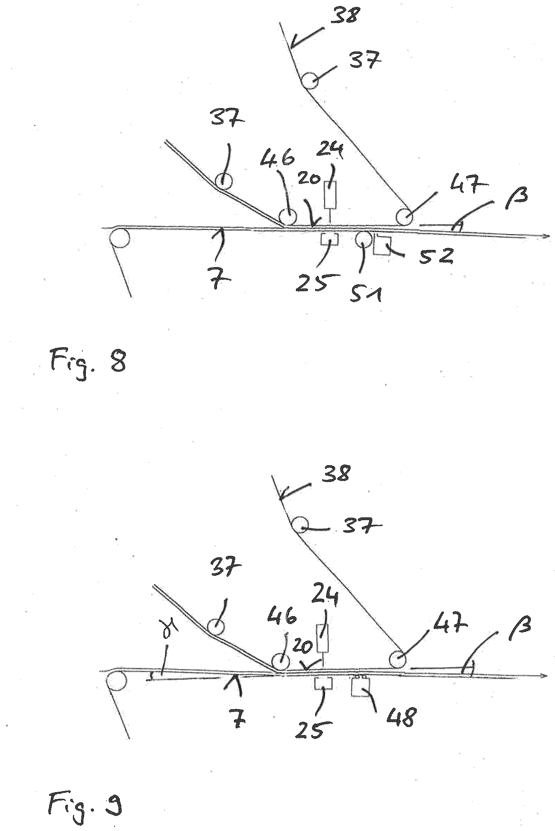

Eine dritte Ausführungsform einer Vorverfestigungseinheit 22 der vierten Ausführungsform der Anlage 400 ist in Fig. 8 dargestellt. Zwecks Vermeidung von Wiederholungen sollen nur die Unterschiede zur zweiten Ausführungsform der Vorverfestigungseinheit beschrieben werden. Gleiche Bezugszeichen bezeichnen gleiche Komponenten.

Bei der dritten Ausführungsform der Vorverfestigungseinheit 22 ist wiederum eine Druckrolle 51 vorgesehen, die parallel zur ersten unteren Rolle 46 ausgerichtet ist, sich über die gesamte Breite des ersten umlaufenden Bandes 8 erstreckt und gegen dessen oberen Trum 7 von unten drückt. In Produktionsrichtung ist unmittelbar hinter dieser Druckrolle 51 eine Saugkammer 52 vorgesehen, die zwar nicht an dem oberen Trum 7 des ersten umlaufenden Bandes 8 von unten anliegt, jedoch durch Unterdruckbeaufschlagung einen von oben nach unten durch das Band 8 gerichteten Luftstrom erzeugt und damit die Ablösung der Lage 13 von dem Übernahmeband 38 unterstützt. Hierzu weist die Saugkammer 51 eine Ansaugöffnung 53 auf, die in Produktionsrichtung P gesehen der Druckrolle 51 benachbart ist.

Bei dieser dritten Ausführungsform wird somit ein Ablösen der Lage 13 von dem Übernahmeband 38 in Produktionsrichtung P hinter der Druckrolle 51 nicht allein durch die Richtungsänderung, die das erste umlaufende Band 8 beim Passieren der Druckrolle 51 erfährt, bewirkt, sondern durch die Saugkammer 52 unterstützt. Da das erste umlaufende Band 8 an der Saugkammer nicht anliegt, sondern nur an der mitdrehenden Druckrolle 52, ist die auf das erste umlaufende Band 8 wirkende Reibung im Vergleich zu dem ersten Ausführungsbeispiel der Vorverfestigungseinheit reduziert.

In Fig 9 ist die erste Ausführungsform einer Vorverfestigungseinheit 22 der vierten Ausführungsform der Anlage 400 mit einer geänderten Führung des oberen Trums 7 des ersten umlaufenden Bandes dargestellt. Zwecks Vermeidung von Wiederholungen sollen nur die Unterschiede zur der in Fig 6 dargestellten Führung beschrieben werden. Gleiche Bezugszeichen bezeichnen gleiche Komponenten.

Bei der in Fig. 6 dargestellten Führung des oberen Trums 7 des ersten umlaufenden Bandes 8 erfährt das Band 8 beim Passieren der ersten unteren Rolle 46 keine Richtungsänderung. Um die kompaktierende Wirkung der ersten unteren Rolle 46 zu erhöhen, erfolgt die Führung des Bandes 8 bei der in Fig. 9 dargestellten Führung hingegen so, dass das obere Trum 7 des ersten umlaufenden Bandes 8 im Bereich der ersten unteren Rolle 46 gegen das Übernahmeband 38 gedrückt und somit durch die Wirkung der Rolle 46 eine Richtungsänderung um einen kleinen Winkel λ erfährt.

Bei dem die drei vorbeschriebenen Ausführungsformen der erfindungsgemäßen Vorrichtung dient zur Bereitstellung der Langfasern 4 umfassenden Lage 5 eine Kardiereinheit 1. Es versteht sich, dass zur Bereitstellung einer derartigen Lage nicht nur eine Kardiereinheit dienen kann, sondern auch andere Einrichtungen, mit denen eine Langfasern 4 umfassenden Lage inline herstellbar ist. Darüber hinaus kann Lage auch separat, d. h. offline erzeugt und bspw. zu einer Rolle aufgewickelt bereitgestellt werden. In einem solchen Fall ist anstelle der Kardiereinheit bspw. eine Abwickelstation vorgesehen. Auch ist es möglich, die erfindungsgemäße Vorrichtung zur Bereitstellung von Fasern in einer Anlage einzusetzen, bei denen nur diese Fasern zu einer Vliesbahn verarbeitet werden, oder in solchen Anlagen, die zur Herstellung von unterliegenden Bahnen dienen.

### Bezugszeichenliste:

- 100, 200, 300, 400: Vorrichtung
- 1: Kardiereinheit
- 2: Ablageband
- 3: Trum
- 4: Langfasern
- 5: Lage
- 6: Saugwalze
- 7: oberes Trum
- 8: erstes umlaufendes Band
- 9: Rollen
- 10, 10': Kompaktierungseinrichtungen
- 11: Einrichtungen
- 12: Kurzfasern
- 13: Lage
- 14: Anlageband
- 15: Rollen
- 16: Bereich
- 17: Stoffauflauf
- 18: Bereich
- 19: Bereich
- 20: unteres Trum
- 21,21': untere Rollen
- 22: Vorverfestigungseinheit
- 23: Fließbahn
- 24: Düsenbalken
- 25: Auffangvorrichtung
- 26: Düsenbalken
- 27: Auffangvorrichtungen
- 28: Verfestigungseinrichtung
- 29: Verfestigungstrommel
- 30: Düsenbalken
- 31: untere Rollen
- 32: Druckbalken
- 33: Druckwalzen
- 34: Abgabetrum
- 35: Rückführtrum
- 36: Faserauffangvorrichtung
- 37: obere Rollen
- 38: Übernahmeband
- 39: Aufnahmetrum
- 40: Einrichtung
- 41: Tragstruktur
- 42: Führungsmittel
- 43: Rolle
- 44: Saugvorrichtung
- 45: Anlenkeinheiten
- 46: erste untere Rolle
- 47: zweite untere Rolle
- 48: Saugkammer
- 49: Anlageflächen
- 50: Ansaugöffnung
- 51: Druckrolle
- 52: Saugkammer
- 53: Ansaugöffnung

- α: Winkel
- β: Winkel

- λ: Winkel

- P: Produktionsrichtung
- Ü: Übergangsstelle

## Patentansprüche

1. Anlage (100, 200, 300, 400) zum Verfestigen einer Kurzfasern (12) umfassenden Lage (13) mit einer Langfasern (4) umfassenden Lage (5) zu einer Vliesbahn (23),
mit einem ersten umlaufenden Band (8), auf welchem die Langfasern (4) umfassende Lage (5) ablegbar und in einer Produktionsrichtung (P) verlagerbar ist,
mit einem umlaufenden Ablageband (14), auf das die Kurzfasern (12) mit einem Stoffauflauf (17) zur Bildung der Lage (13) ablegbar sind und welches ein Abgabetrum (34) aufweist,
mit einem umlaufenden Übernahmeband (38) mit einem Aufnahmetrum (39), mittels welchem die Kurzfasern (12) umfassende Lage (13) an einer Übergangsstelle (Ü) an die Langfasern (4) umfassende Lage (5) übergebbar ist, und mit einer mit dem Abgabetrum (34) oder vorzugsweise mit dem Aufnahmetrum (39) in Wirkverbindung stehenden Einrichtung (40), mit welcher Abgabetrum (34) und Aufnahmetrum (39) zwischen einer Übernahmeposition, in welcher zumindest ein wesentlicher Anteil der Fasern (12) von dem Abgabetrum (34) dem Aufnahmetrum (39) übergeben und vom Übernahmeband (38) weitergeführt werden, und einer Ruheposition, in welcher Abgabetrum (34) und Aufnahmetrum (39) voneinander beabstandet sind und zumindest ein wesentlicher Anteil der Fasern (12) nicht dem Aufnahmetrum (39) übergeben und vom Ablageband (14) weitergeführt wird, verlagerbar ist,
**dadurch gekennzeichnet,**
**dass** die Anlage (100, 200, 300, 400) eine Vorverfestigungseinheit (22) umfasst, die zwei in Produktionsrichtung (P) voneinander beabstandete Kompaktierungseinrichtungen (10, 10') aufweist, die in einem Bereich auf das Übernahmeband (38) wirken und zwischen sich ein unteres Trum 20 des Übernahmebandes (38) bilden,
und mit einer in Produktionsrichtung (P) zwischen den beiden Kompaktierungseinrichtungen (10, 10') angeordneten Verfestigungseinrichtung (34), mittels welcher die beiden Lagen (5, 13) durch Verwirbelung der Lang- und Kurzfasern (4, 12) miteinander verfestigbar sind,
wobei die Kompaktierungseinrichtungen (10, 10') und die Verfestigungseinrichtung (34) derart miteinander wirkverbunden sind, dass sie sich stets gemeinsam in einem Betriebszustand oder in einem Ruhezustand befinden, wobei die Verfestigungseinrichtung (34) einen Düsenbalken (24) umfasst.

2. Anlage nach Anspruch 1, **dadurch gekennzeichnet, dass** die Kompaktierungseinrichtungen (10, 10') jeweils eine Druckwalze (33) umfassen.

3. Anlage nach Anspruch 1 oder 2, **dadurch gekennzeichnet, dass** die Kompaktierungseinrichtungen (10, 10') jeweils einen Druckbalken (32) umfassen.

4. Anlage nach einem der Ansprüche 1 bis 3, **dadurch gekennzeichnet, dass** in Produktionsrichtung (P) gesehen vor der Vorverfestigungseinheit (22) eine von dem Übernahmeband (38) umlaufene untere Rolle (31) und/oder in Produktionsrichtung (P) gesehen hinter der Vorverfestigungseinheit (22) eine von dem Übernahmeband (38) umlaufende untere Rolle (31) angeordnet ist und dass vorzugsweise die unteren Rollen (31) derart angeordnet sind, dass das zweite Band (14) zum ersten Band (8) zwischen den unteren Rollen (31) und der jeweils benachbarten Kompaktierungseinrichtung (10) einen Einlaufwinkel (α) zwischen 1° und 10° und einen Auslaufwinkel (α') von größer 1° aufweisen.

5. Anlage nach Anspruch 1, **dadurch gekennzeichnet, dass** die in Produktionsrichtung (P) gesehen erste Kompaktierungseinrichtung (10) von oben gegen das untere Trum (20) des Übernahmebandes (38) und die in Produktionsrichtung (P) gesehen zweite Kompaktierungseinrichtung (10') von unten gegen das obere Trum (7) des ersten umlaufenden Bandes (8) wirkt derart, dass das erste umlaufende Band (8) beim Passieren der zweiten Kompaktierungseinrichtung (10') eine Richtungsänderung um einen Winkel (β) erfährt.

7. Anlage nach Anspruch 6, **dadurch gekennzeichnet, dass** die erste Kompaktierungseinrichtung (10) eine erste untere Rolle (46) umfasst.

8. Anlage nach Anspruch 6 oder 7, **dadurch gekennzeichnet, dass** die zweite Kompaktierungseinrichtung (10) eine Saugkammer (48) umfasst.

9. Anlage nach Anspruch 8, **dadurch gekennzeichnet, dass** die Saugkammer (48) mindestens eine Anlagefläche (49) für das erste umlaufende Band (8) und vorzugsweise eine Ansaugöffnung (50) umfasst.

10. Anlage nach Anspruch 6 oder 7, **dadurch gekennzeichnet, dass** die zweite Kompaktierungseinrichtung (10) eine Druckrolle (51) umfasst, und dass in Produktionsrichtung (P) vorzugsweise unmittelbar hinter der Druckrolle (51) eine Saugkammer (52) vorgesehen ist.

11. Anlage nach einem der Ansprüche 1 bis 10, **dadurch gekennzeichnet, dass** der Düsenbalken (24) innerhalb des Übernahmebandes (38) angeordnet ist.

12. Anlage nach einem der Ansprüche 1 bis 11, **dadurch gekennzeichnet, dass** die Einrichtung (40) im Bereich des Aufnahmetrums (39) am Übernahmeband (38) anliegende oder in Anlage bringbare, mit einer Bewegungskomponente senkrecht zum Aufnahmetrum (39) verlagerbare, in Umlaufrichtung des Übernahmebandes voneinander beabstandete, erste und zweite Führungsmittel (42) umfasst.

13. Anlage nach Anspruch 12, **dadurch gekennzeichnet, dass** die Einrichtung (40) eine wahlweise aktivierbare Saugvorrichtung (44) umfasst, mittels welcher das Übernahmeband (38) im Bereich des Aufnahmetrums (39) ansaugbar ist, die vorzugsweise in Umlaufrichtung zwischen den beiden Führungsmitteln (42) angeordnet ist.

14. Anlage nach Anspruch 12 oder 13, **dadurch gekennzeichnet, dass** die Einrichtung (40) eine Tragstruktur (41) umfasst, die relativ zum Aufnahmetrum (39) motorisch parallel verschiebbar und/oder verschwenkbar angeordnet ist.

15. Anlage nach einem der Ansprüche 1 bis 14, **dadurch gekennzeichnet, dass** eine Faserauffangvorrichtung (36) zum Auffangen von Fasern (12) vorgesehen ist, die nicht dem Aufnahmetrum (39) übergeben worden sind und dass vorzugsweise das Ablageband (14) eine Umlenkrolle (15) umfasst, mit welcher das Abgabetrum (34) in ein Rückführtrum (35) umgelenkt ist und die Faserauffangvorrichtung (36) unter der Umlenkrolle (15) angeordnet ist.

## Claims

1. Apparatus (100, 200, 300, 400) for bonding a layer (13) comprising short fibers (12) with a layer (5) comprising long fibers (4) to form a non-woven web (23),
having a first circulating belt (8) on which the layer (5) comprising long fibers (4) can be placed and moved in a direction of production (P),
having a circulating depositing belt (14) onto which the short fibers (12) can be deposited with a headbox (17) to form the layer (13) and which has a delivery strand (34),
having a circulating transfer belt (38) with a receiving strand (39), by means of which the layer (13) comprising short fibers (12) can be transferred at a transfer point (Ü) to the layer (5) comprising long fibers (4),
and having a device (40) that is operatively connected to the delivery strand (34) or preferably to the receiving strand (39), by means of which the delivery strand (34) and the receiving strand (39) can be moved between a transfer position, in which at least a substantial proportion of the fibers (12) are transferred from the delivery strand (34) to the receiving strand (39) and conveyed onward by the transfer belt (38), and a rest position, in which the delivery strand (34) and the receiving strand (39) are spaced apart and at least a substantial proportion of the fibers (12) is not transferred to the receiving strand (39) but is conveyed onward by the depositing belt (14),
**characterized in that**
the apparatus (100, 200, 300, 400) comprises a pre-bonding unit (22) which has two compacting devices (10, 10') spaced apart from one another in the direction of production (P) which act on the transfer belt (38) in one region and form a lower strand 20 of the transfer belt (38) between them,
and having a bonding device (24) arranged between the two compacting devices (10, 10') in the production direction (P),
by means of which the two layers (5, 13) can be bonded to one another by intermingling the long and short fibers (4, 12),
the compacting devices (10, 10') and the bonding device (34) being operatively connected to one another in such a way that they are both always in an operating state or in a resting state, wherein the bonding device (34) comprises a nozzle bar (24).

2. Apparatus according to claim 1, **characterized in that** the compacting devices (10, 10') each comprise a pressure roller (33).

3. Apparatus according to claim 1 or 2, **characterized in that** the compacting devices (10, 10') each comprise a pressure bar (32).

4. Apparatus according to any of claims 1 to 3, **characterized in that** a lower roller (31) circulated by the transfer belt (38) is arranged in front of the pre-bonding unit (22) when viewed in the direction of production (P) and/or a lower roller (31) circulated by the transfer belt (38) is arranged behind the pre-bonding unit (22) when viewed in the direction of production (P), and **in that** the lower rollers (31) are preferably arranged in such a way that the second belt (14) has, with respect to the first belt (8), between the lower rollers (31) and the respective adjacent compacting device (10), an entry angle (α) between 1° and 10° and an exit angle (α') greater than 1°.

5. Apparatus according to claim 1, **characterized in that** the first compacting device (10), when viewed in the direction of production (P) from above and counter to the lower strand (20) of the transfer belt (38), and the second compacting device (10'), when viewed in the direction of production (P) from below and counter to the upper strand (7) of the first circulating belt (8), acts in such a way that the first circulating belt (8) undergoes a change in direction by an angle (β) when passing through the second compacting device (10').

7. Apparatus according to claim 6, **characterized in that** the first compacting device (10) comprises a first lower roller (46).

8. Apparatus according to either claim 6 or claim 7, **characterized in that** the second compacting device (10') comprises a suction chamber (48).

9. Apparatus according to claim 8, **characterized in that** the suction chamber (48) comprises at least one contact surface (49) for the first circulating belt (8), and preferably an intake port (50).

10. Apparatus according to claim 6 or 7, **characterized in that** the second compacting device (10) comprises a pressure roller (51) and **in that** a suction chamber (52) is provided, preferably immediately behind the pressure roller (51) in the direction of production (P).

11. Apparatus according to any of claims 1 to 10, **characterized in that** the nozzle bar (24) is arranged inside the transfer belt (38).

12. Apparatus according to any of claims 1 to 11, **characterized in that** the device (40) comprises, in the region of the receiving strand (39), first and second guide means (42) which rest against or can be brought into contact with the transfer belt (38), which can be moved with a movement component perpendicular to the receiving strand (39), and which are spaced apart from one another in the circumferential direction of the transfer belt.

13. Apparatus according to claim 12, **characterized in that** the device (40) comprises a selectively activatable suction device (44) by means of which the transfer belt (38) can be suctioned in the region of the receiving strand (39), which suction device is preferably arranged in the circumferential direction between the two guide means (42).

14. Apparatus according to claim 12 or 13, **characterized in that** the device (40) comprises a support structure (41) which is arranged such that it can be moved and/or pivoted by a motor in parallel with the receiving strand (39).

15. Apparatus according to any of claims 1 to 14, **characterized in that** a fiber-collecting device (36) is provided for collecting fibers (12) that were not transferred to the receiving strand (39) and
**in that** the depositing belt (14) preferably comprises a deflection roller (15) with which the delivery strand (34) is deflected into a return strand (35) and the fiber-collecting device (36) is arranged under the deflection roller (15).

## Revendications

1. Installation (100, 200, 300, 400) de consolidation d'une couche (13) comprenant des fibres courtes (12) avec une couche (5) comprenant des fibres longues (4) en une bande de non-tissé (23),
présentant une première bande (8) tournante, sur laquelle la couche (5) comprenant des fibres longues (4) peut être déposée et déplacée dans un sens de production (P) et
présentant une bande de dépôt (14) tournante, sur laquelle les fibres courtes (12) peuvent être déposées à l'aide d'une sortie de matière (17) pour la formation de la couche (13) et qui présente un brin de distribution (34),
présentant une bande de transfert (38) tournante présentant un brin de réception (39), au moyen duquel la couche (13) comprenant des fibres courtes (12) peut être transmise au niveau d'un point de transition (Ü) sur la couche (5) comprenant des fibres longues (4),
et présentant un dispositif (40) en liaison active avec le brin de distribution (34) ou de préférence avec le brin de réception (39), à l'aide duquel le brin de distribution (34) et le brin de réception (39) peuvent être déplacés entre une position de transfert, dans laquelle au moins une partie essentielle des fibres (12) passe du brin de distribution (34) au brin de réception (39) et continue d'avancer avec la bande de transfert (38), et une position de repos dans laquelle le brin de distribution (34) et le brin de réception (39) sont écartés l'un de l'autre et au moins une partie essentielle des fibres (12) ne passe pas au brin de réception (39) et continue d'avancer avec la bande de dépôt (14),
**caractérisée en ce que**
l'installation (100, 200, 300, 400) comprend une unité de préconsolidation (22) qui présente deux dispositifs de compactage (10, 10') écartés l'un de l'autre dans le sens de production (P), qui agissent dans une zone sur la bande de transfert (38) et forment entre eux un brin inférieur (20) de la bande de transfert (38),
et présentant un dispositif de consolidation (24) agencé entre les deux dispositifs de compactage (10, 10') dans le sens de production (P),
au moyen duquel les deux couches (5, 13) peuvent être consolidées l'une avec l'autre par entrelacement des longues fibres et des courtes fibres (4, 12),
les dispositifs de compactage (10, 10') et le dispositif de consolidation (34) étant en liaison active les uns avec les autres de manière telle qu'ils se trouvent toujours ensemble dans un état de fonctionnement ou dans un état de repos, le dispositif de consolidation (34) comprenant une rampe de buses (24).

2. Installation selon la revendication 1, **caractérisée en ce que** les dispositifs de compactage (10, 10') comprennent respectivement un cylindre de pression (33).

3. Installation selon la revendication 1 ou 2, **caractérisée en ce que** les dispositifs de compactage (10, 10') comprennent respectivement une barre de pression (32).

4. Installation selon l'une quelconque des revendications 1 à 3,
**caractérisée en ce que**, vu dans le sens de production (P), un galet inférieur (31) entouré par la bande de transfert (38) est agencé en amont de l'unité de préconsolidation (22) et/ou, vu dans le sens de production (P), un galet inférieur (31) entouré par la bande de transfert (38) est agencé en aval de l'unité de préconsolidation (22) et **en ce que**, de préférence, les galets inférieurs (31) sont agencés de manière telle que la deuxième bande (14) présente, par rapport à la première bande (8), entre les galets inférieurs (31) et le dispositif de compactage (10) respectivement adjacent, un angle d'entrée (α) entre 1° et 10° et un angle de sortie (α') supérieur à 1°.

5. Installation selon la revendication 1, **caractérisée en ce que,** vu dans le sens de production (P), le premier dispositif de compactage (10) agit depuis le dessus contre le brin inférieur (20) de la bande de transfert (38) et, vu dans le sens de production (P), le deuxième dispositif de compactage (10') agit depuis le dessous contre le brin supérieur (7) de la première bande tournante (8), de sorte que la première bande tournante (8), en passant au niveau du deuxième dispositif de compactage (10'), subit une modification de direction selon un angle (β).

7. Installation selon la revendication 6, **caractérisée en ce que** le premier dispositif de compactage (10) comprend un premier galet inférieur (46).

8. Installation selon la revendication 6 ou 7, **caractérisée en ce que** le deuxième dispositif de compactage (10) comprend une chambre d'aspiration (48).

9. Installation selon la revendication 8, **caractérisée en ce que** la chambre d'aspiration (48) comprend au moins une surface de contact (49) pour la première bande tournante (8) et de préférence une ouverture d'aspiration (50).

10. Installation selon la revendication 6 ou 7, **caractérisée en ce que** le deuxième dispositif de compactage (10) présente un galet de pression (51) et **en ce qu'**une chambre d'aspiration (52) est située directement derrière le galet de pression (51) dans le sens de production (P).

11. Installation selon l'une quelconque des revendications 1 à 10,
**caractérisée en ce que** la rampe de buses (24) est agencée à l'intérieur de la bande de transfert (38).

12. Installation selon l'une quelconque des revendications 1 à 11,
**caractérisée en ce que** le dispositif (40) comprend, dans la zone du brin de réception (39), un premier et un deuxième moyen de guidage (42) placés contre la bande de transfert (38) ou pouvant être introduits dans l'installation, pouvant être déplacés avec une composante de déplacement verticalement par rapport au brin de réception (39) et écartés l'un de l'autre dans le sens de rotation de la bande de transfert.

13. Installation selon la revendication 12, **caractérisée en ce que** le dispositif (40) comprend un mécanisme d'aspiration (44) pouvant être activé au choix, au moyen duquel la bande de transfert (38) peut être aspirée dans la zone du brin de réception (39), lequel mécanisme est de préférence disposé entre les deux moyens de guidage (42) dans le sens de rotation.

14. Installation selon la revendication 12 ou 13, **caractérisée en ce que** le dispositif (40) présente une structure support (41) qui est agencée de manière à pouvoir être déplacée parallèlement et/ou pivotée à l'aide d'un moteur et par rapport au brin de réception (39).

15. Installation selon l'une quelconque des revendications 1 à 14,
**caractérisée en ce qu'**un mécanisme de récupération (36) des fibres, destiné à récupérer les fibres (12) qui n'ont pas été transmises au brin de réception (39), est utilisé et
**en ce que** la bande de dépôt (14) comprend de préférence un galet de déviation (15) à l'aide duquel le brin de distribution (34) est dévié en un brin de retour (35) et le mécanisme de récupération (36) des fibres est agencé sous le galet de déviation (15).
